# EUROPEAN PATENT APPLICATION

(11) **EP 1 402 841 A1**
(43) Date of publication of application: **31.03.2004**
(21) Application number: 03425619.8
(22) Date of filing: 25.09.2003
(51) Int. Cl.: A61C 1/18, A61C 1/05

(54) **A dental handpiece**

(30) Priority: 30.09.2002 IT BO20020617
(71) Applicant: CASTELLINI S.p.A., I-40013 Castel Maggiore (Bologna) (IT)
(72) Inventor: Castellini, Franco, 40124 Bologna (IT)
(74) Representative: Lanzoni, Luciano

(57) **Abstract**

A dental handpiece (1) for use in surgical operations in the oral cavity comprises: a first casing (2) fitted with a tool (3), at least one first conduit (6) for supplying fluid to a second casing (4), the latter having a corresponding second conduit (7) running through it for the fluid; a supplementary third conduit (8) running along the outside of the first and second casings (2,4) and leading to a point close to the tool (3); the handpiece (1) further comprising means (9) for dividing the fluid flow, and connecting the first conduit (6) to the second conduit (7) and to the supplementary third conduit (8), and means (10) for controlling the fluid flow and acting on the second and third conduits (7,8).

## Description

The present invention relates to a dental handpiece adaptable for use in surgical operations in the oral cavity.

Conventional dental handpieces are divided into instruments, for example, the turbine and the micromotor, used for removal of dental material, and instruments, for example, the syringe and the polymerising lamp, used for complementary stages of dental treatment.

Micromotors usually consist of a first casing which forms at least part of the handle of the handpiece and which is equipped with an end head by which it can be coupled to a tool (for example, a bur).

The first casing is connected to a second casing, which houses a motor. The connection is coaxial by means of a quick-release fitting on the respective ends of the two casings. The second casing is in turn connected, at its other end, to an endpiece that supplies water or physiological saline, air for nebulising the liquid, air for cooling the micromotor and electricity for driving the micromotor.

The endpiece is at the end of a tube leading out of a handpiece mounting tray on a dental unit or self-contained apparatus (referred to as "stand-alone" in the jargon of the trade) from which the fluids and electricity used to drive the handpiece are supplied.

In standard handpieces of the latest generation, both the first and second casings have inside them a plurality of separate, sealed conduits for the passage of the cleaning fluids (and the cooling air) to the part near the tool where the fluids are forced out through corresponding holes. This design not only makes the handpiece practical and easy to handle but also enables the fluid to be evenly distributed and more precisely directed around the working area.

Some applications, however, and in particular surgical operations, require a handpiece structured differently from the standard handpiece described above: for these surgical operations, the only conduit that needs to remain active is the one that supplies the liquid, which usually consists of physiological saline, while the air supply is turned off.

This is because the dental surgeon must always have a perfect view of the part of the oral cavity he/she is operating on, without the cleaning action of the spray mixture creating unwanted nebulisation that obscures the view of the oral cavity. Further, the conduit for the cooling fluid must be totally disposable so as to maintain a high level of sterility during the operation.

Thus, the conduit that supplies the fluid must not be like the one used in standard handpieces which, as mentioned above, is built into the second casing of the handpiece and leads into the first casing near the end head of the latter.

To achieve this possibility, the Applicant devised and produced an adapter device that may be conveniently applied, without changing the micromotor, to all types of standard handpieces normally used and equipped with an external conduit for the supply of physiological saline.

This solution, disclosed in patent EP 727.190, envisages an interface element which can be positioned and locked between the endpiece and a second casing to form an extension of the handpiece. The interface element houses, at the surface of it opposite the endpiece, a third blind conduit which can be coaxially connected to the first conduit that supplies air from the endpiece, and a fourth conduit which can be connected to the matching first conduit that supplies water or physiological saline. The fourth conduit extends from the inside to the outside of the interface element so that it is connected to a conduit portion that is integral with the outside of the first casing.

This solution thus makes it possible to quickly adapt handpieces with standard micromotors to make them suitable and safe for use in surgical operations.

Along with these developments, technological progress in the field of handpieces has gradually replaced traditional electric brush motors with brushless motors. Brushless motors improve the performance of the handpieces because they optimise speed control, provide better torque response, reduce noise, friction and overheating, which also means that motor life is considerably increased.

The changeover to brushless motors has resulted in changes to the internal structure at least of the aforementioned second casing, in particular on account of the need for direct connections with sensors used for feedback control of the motor (for example, Hall effect sensors). This has led to a different construction of the motor connection systems and partial adaptation of the arrangement of the conduits that supply water or physiological saline, spray air, and air for cooling the micromotor.

Obviously, these changes have made the adapter device described above unsuitable for use with a brushless micromotor and, to overcome this drawback, the Applicant has therefore devised and produced an adapter unit that is versatile, practical, extremely easy to adjust and, at the same time, hygienic and safe for use in surgical applications if connected to first casings in which coolant is supplied on the outside, and in all other applications if connected to first casings in which fluid is passed through the inside.

This aim is achieved through a dental handpiece for use in surgical operations in the oral cavity and comprising: a first casing fitted with a tool at one end and being stably connected, at the other end, to the end of a second casing that houses a micromotor which drives the tool; the other end of the second casing being connectable to an endpiece having at least one first conduit for supplying fluid to the second casing, the latter having a corresponding second conduit running through it for the fluid; a supplementary third conduit running along the outside of the first and second casings and leading to a point close to the tool; the handpiece further comprising means for dividing the fluid flow, acting between the endpiece and the second casing, and connecting the first conduit to the second conduit and to the supplementary third conduit, and means for controlling the fluid flow and acting on the second and third conduits in such a way that the fluid can be selectively directed either into the second or into the third conduit, depending on the treatment to be carried out.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a perspective view of a dental handpiece with an adapter, made according to the present invention;
- Figure 2 is a schematic perspective detail view of showing the working end of the dental handpiece of Figure 1;
- Figure 3 illustrates a detail A of the handpiece of Figure 1 in a side view, with some parts cut away and others in cross section in order to better illustrate others;

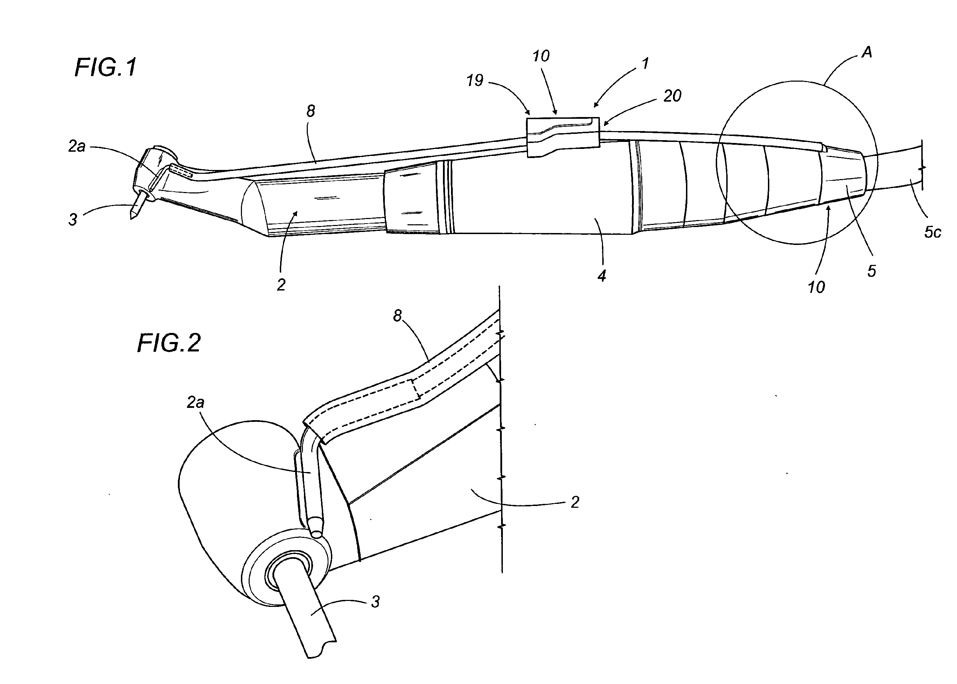

With reference to the accompanying drawings, in particular Figure 1, the dental handpiece according to the invention is used for removal of dental material from the oral cavity, and can be suitably adapted for use also in surgical operations.

This dental handpiece, denoted in its entirety by the numeral 1, comprises a first casing 2 fitted, at one end, with a tool 3 (for example, a bur) and stably connected, at the other end, to a second casing 4 that houses a micromotor (not illustrated) which drives the tool 3.

At its other end, the second casing 4 is connectable to an endpiece 5 of a sheath 5c enclosing the conduits that supply fluids and air for the user and electricity and cooling air for the micromotor, not all of these parts being illustrated since they do not strictly form part of the invention.

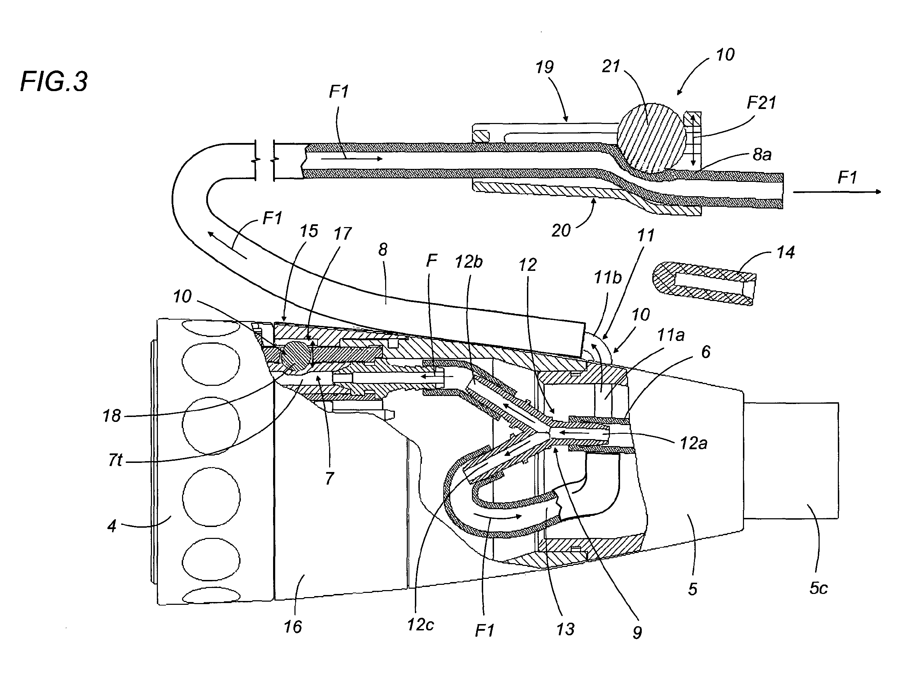

Figure 3 shows a first fluid supply conduit 6 (which the present invention is concerned with in particular) leading out of the endpiece 5 and connected to the second casing 4, the second casing 4 having a corresponding second conduit 7 running through it for the fluid from the first conduit 6.

The fluid may be water or physiological saline or other sterile fluid, whichever is selected upstream of the sheath 5c.

In addition to the above, there is also a supplementary, third conduit 8 running along the outside of the first and second casings 2 and 4 and leading to a point close to the tool 3 (see Figure 2).

The third conduit 8 is used in special working conditions, that is to say, when the first casing 2 requires an external fluid supply.

As illustrated in Figure 3, the handpiece 1 according to the invention also comprises means 9 for dividing the fluid flow, acting between the endpiece 5 and the second casing 4, and connecting the first conduit 6 both to the second conduit 7 and to the supplementary third conduit 8 (see arrows F and F1, indicating the direction of flow in Figure 3).

In addition to the dividing means 9, there are also means 10 for controlling the fluid flow and acting on the second and third conduits 7 and 8 in such a way that the fluid can be selectively directed either into the second conduit 7 or into the third conduit 8, depending on the treatment to be carried out.

Looking more closely at the technical details, the dividing means 9 comprise a second, Y-shaped branched connecting element 12 whose single passageway 12a at its single-ended side is connected coaxially and in sealed fashion to the first conduit 6 in the endpiece 5, while the two passageways 12b and 12c at the branched, double-ended side of the connecting element 12 are connected to the second and third conduits 7 and 8, respectively.

More specifically, again with reference to Figure 3, one of the passageways 12b and 12c of the branched connecting element 12 is joined to a first connecting element 11 which passes through the endpiece 5 and which is in turn connected to the third, external fluid supply conduit 8.

This connection between the branch passageway 12c and the first connecting element 11 is made by a fourth flexible connecting conduit 13.

The aforementioned first connecting element 11 constitutes a part of the flow control means 10 and, as stated above, joins the third conduit 8 to the second connecting element 12.

The first connecting element 11 passes through and over the endpiece 5 and is removably connectable to both the third conduit 8 and the fourth connecting conduit 13.

More specifically, the first connecting element 11 consists of a rigid pipe which is stably associated with the endpiece 5 and which presents a first portion 11a extending into the endpiece 5 (to connect up with the fourth conduit 13) and a second portion 11b protruding out of the endpiece 5 at a suitable angle, so as to connect up with the third conduit 8.

If the third conduit 8 is removed from the handpiece 1 for working or hygienic requirements, the rigid pipe 11 may be associated with a sealed stopper 14 for plugging the protruding portion 11b so as to prevent unwanted leakage of fluids until another third conduit 8 is fitted (see Figure 3 again).

The aforementioned flow control means 10 also comprise a first flow regulating unit 15 acting on the second conduit 7 in the second casing 4.

As shown in Figure 3, the first flow regulating unit 15 comprises a ring nut 16. This ring nut 16 has a cam-like housing 17 for means 18 designed to regulate fluid flow in the second supply conduit 6 when the ring nut 16 itself is turned.

More specifically, the means 18 consist of a ball placed between the ring nut 16 and the second conduit 7, this portion of which consists of a tubular element 7t that is elastically deformable under the action of the ring nut 16 when the latter is turned, so as to increase or decrease the section area of the tubular element 7t for the passage of the fluid.

The section area of the tubular element 7t may vary from a position of maximum fluid passage equivalent to the full internal section area of the tubular element 7t to a closed position in which the tubular element 7t is fully closed. The closed position is adopted when the supplementary third conduit 8 is used.

The flow control means 10 also comprise a second flow regulating unit 19 acting on the supplementary third conduit 8.

The second flow regulating unit 19 (see Figure 3) consists of a grip element 20 enclosing a portion 8a of the third conduit 8.

In addition to this, the grip element 20 also partially houses a circular element or wheel 21 acting on the internal portion 8a: in practice, the circular element or wheel 21 may be moved manually (see arrow F21) away from or towards the portion 8a of the conduit 8, so as to increase or decrease the section area of the internal portion 8a, thanks also to the tapered configuration of a part of the inside wall of the element 20, thus varying the section area from a position of maximum passage of the fluid, equivalent to use of the full section area of the internal portion 8a for the passage of the fluid, to a fully closed position in which the internal portion 8a is closed and fluid passage totally inhibited.

Some of the elements described above are preferably of the interchangeable type and, above all, of the disposable type.

In particular, the third conduit 8 is necessarily of the disposable type, used only once on a patient, and changed each time a new surgical operation is started. Thus, the third conduit 8, can be easily detached from the first casing 2 and from the endpiece 5 of the handpiece 1 by sliding it off the portion 11b and off the fixed conduit portion 2a made on the end of the first casing 2.

Similarly, the fourth conduit 13 and the second connecting element 12 may also be substituted, if they are of the disposable type, thus keeping the supply system for the third conduit 8 at a high level of sterility.

A handpiece made as described above achieves the aforementioned aims thanks to a fluid supply system that can be selected by the dental surgeon according to the treatment to be carried out depending on the type of first casing 2 fitted.

Thanks to the structure of the selection unit located between the endpiece and the casing that houses the micromotor, the architecture of the latter need not be varied. In particular, the unit as described above makes it possible to use brushless motors in conjunction with first casings 2 either with internal cooling fluid or with an external fluid supply without having to fit any additional parts.

This solution makes the handpiece extremely versatile and practical. To change the fluid supply from a traditional spray system to a fluid only system required for surgical operations, all the dental surgeon has to do is perform a few simple manual operations on the handpiece.

It will be understood that the invention can be modified and adapted in several ways without thereby departing from the scope of the inventive concept. Moreover, all the details of the invention may be substituted by technically equivalent elements.

## Claims

1. A dental handpiece, in particular a dental handpiece (1) for use in surgical operations in the oral cavity; the handpiece (1) comprising:
- a first casing (2) fitted with a tool (3) at one end and, at the other end, being stably connected to the end of
- a second casing (4) that houses a micromotor which drives the tool (3), the other end of the second casing (4) being connectable to
- an endpiece (5) having at least one first conduit (6) for supplying fluid to the second casing (4), the latter having a corresponding second conduit (7) running through it for the fluid;
- a supplementary third conduit (8) running along the outside of the first casing (2) and second casing (4) and leading to a point close to the tool (3); the handpiece being **characterised in that** it further comprises:
- means (9) for dividing the fluid flow, acting between the endpiece (5) and the second casing (4), and connecting the first conduit (6) to the second conduit (7) and to the supplementary third conduit (8) ;
- means (10) for controlling the fluid flow and acting on the second and third conduits (7, 8) in such a way that the fluid can be selectively directed either into the second conduit (7) or into the third conduit (8), depending on the treatment to be carried out.

2. The handpiece according to claim 1, **characterised in that** the control means (10) comprise a first connecting element (11) fitted between the third conduit (8) and the flow dividing means (9) and connecting the third conduit (8) and the dividing means (9) to each other; the connecting element (11) passing through and over the endpiece (5) and being removably connectable at least to the third conduit (8).

3. The handpiece according to claim 1, **characterised in that** the flow dividing means (9) comprise a second, Y-shaped branched connecting element (12) whose single passageway (12a) at its single-ended side is connected coaxially and in sealed fashion to the first conduit (6) in the endpiece (5), while the two passageways (12b, 12c) at its branched, double-ended side are connected to the second and third conduits (7, 8), respectively.

4. The handpiece according to claim 3, **characterised in that** one of the passageways (12b, 12c) of the branched connecting element (12) is joined to a first connecting element (11) which passes through the endpiece (5) and which is in turn connected to the third, fluid supply conduit (8).

5. The handpiece according to claim 4, **characterised in that** one of the passageways (12b, 12c) of the branched connecting element (12) is joined to the first connecting element (11) by a fourth connecting conduit (13).

6. The handpiece according to claim 2, **characterised in that** the first connecting element (11) is a rigid pipe which is stably associated with the endpiece (5) and which presents a first portion (11a) extending into the endpiece (5) and a second portion (11b) protruding out of the endpiece (5) so that it can be connected to the third conduit (8).

7. The handpiece according to claim 6, **characterised in that** the rigid pipe (11) may be associated with a sealed stopper (14) for plugging the protruding portion (11b) when the third conduit (8) is not fitted.

8. The handpiece according to claim 1, **characterised in that** the flow control means (10) comprise a first flow regulating unit (15) acting on the second conduit (7) in the second casing (4); the first flow regulating unit (15) comprising a ring nut (16) having a cam-like housing (17) for means (18) designed to regulate fluid flow in the second supply conduit (6) when the ring nut (16) itself is turned.

9. The handpiece according to claim 1, **characterised in that** the means (18) consist of a ball placed between the ring nut (16) and the second conduit (7), this portion of which consists of a tubular element (7t) that is elastically deformable under the action of the ring nut (16) when the latter is turned, so as to increase or decrease the section area of the tubular element (7t) for the passage of the fluid from a position of maximum passage of the fluid, equivalent to the full section area of the tubular element (7t), to a fully closed position in which the tubular element (7t) is closed and fluid passage totally inhibited.

10. The handpiece according to claim 1, **characterised in that** the flow control means (10) comprise a second flow regulating unit (19) acting on the supplementary third conduit; the second flow regulating unit (19) consisting of a grip element (20) enclosing a portion (8a) of the third conduit (8); the grip element (20) partially housing a circular element or wheel (21) acting on the internal portion (8a) by pressing on the circular element (21) in such a way that, thanks to the tapered inside wall of the gripper element (20), the section area of the internal portion (8a) is increased or decreased from a position of maximum passage of the fluid, equivalent to the full section area of the internal portion (8a), to a fully closed position in which the internal portion (8a) is closed and fluid passage is totally inhibited.

11. The handpiece according to claim 1, **characterised in that** the third conduit (8) is of the disposable type and can be changed by detaching it from the first casing (2) and from the endpiece (5) of the handpiece (1).

12. The handpiece according to claim 5, **characterised in that** the fourth conduit (13) is of the disposable, interchangeable type.

13. The handpiece according to claim 3, **characterised in that** the second connecting element (12) is of the disposable, interchangeable type.
